(19) Europäisches Patentamt
European Patent Office
Office européen des brevets

(11) Veröffentlichungsnummer: **0 223 055**
**A1**

# (12) EUROPÄISCHE PATENTANMELDUNG

(21) Anmeldenummer: **86114122.4**

(51) Int. Cl.[4]: **A 01 N 43/76**

(22) Anmeldetag: **13.10.86**

(30) Priorität: **24.10.85 DE 3537825**

(43) Veröffentlichungstag der Anmeldung: **27.05.87**
**Patentblatt 87/22**

(84) Benannte Vertragsstaaten: **AT BE CH DE FR GB IT LI NL**

(71) Anmelder: **BAYER AG, Konzernverwaltung RP**
**Patentabteilung, D-5090 Leverkusen 1 Bayerwerk (DE)**

(72) Erfinder: **Dorgerloh, Michael, Dr., Am Wolfshahn 18,**
**D-5600 Wuppertal 1 (DE)**
Erfinder: **Kretschmer, Axel, Dr., Miles Pharmaceuticals**
**MT 400 Morgan Lane, West Haven CT 06516 (US)**
Erfinder: **Schmidt, Robert R., Dr., Im Waldwinkel 110,**
**D-5060 Bergische-Gladbach 2 (DE)**

## (54) Indole enthaltende herbizide Mittel.

(57) Die Erfindung betrifft die Verwendung von bekannten Indolmycinen als herbizide Mittel.

EP 0 223 055 A1

BAYER AKTIENGESELLSCHAFT 5090 Leverkusen, Bayerwerk
Konzernverwaltung RP
Patentabteilung S/m-c
IIa

# Indole enthaltende herbizide Mittel

Die vorliegende Erfindung betrifft die Verwendung von bekannten Indolen des Indolmycin-Typs (im folgenden Indolmycine genannt) als Herbicide.

Indolmycine, ihre mikrobielle Herstellung aus dem Streptomyces griseus Stamm ATCC 12 648 und ihre antibakterielle Wirksamkeit sind bereits bekannt (vgl. Hirota, A. et. al: J. Med. Chem., 21, 82 (1978) sowie Agric. Biol. Chem. 42, 147 (1978); Rao, K.V.: Antibiot. Chemother. 10, 312 (1960) und Werner R.G. und Demain, A.L.: J. Antibiotics, 34, 551 (1981) sowie The Merck Index, Merck + Co. Inc. Rahway, N.J., U.S.A., 10. Auflage (1983), Seite 720 mit weiteren Literaturangaben).

Es wurde gefunden, daß die Indolmycine der Formel (I)

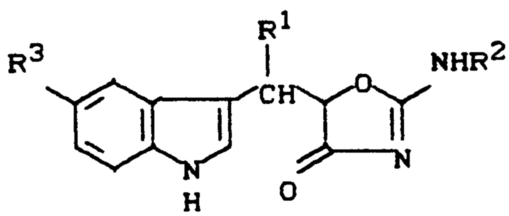

(I)

in welcher

$R^1$ für Wasserstoff oder Methyl steht,

$R^2$ für Wasserstoff oder Methyl steht, und

$R^3$ für Wasserstoff, Hydroxy oder Methoxy steht,

starke herbizide Eigenschaften aufweisen.

Bei Kenntnis des Standes der Technik war es überraschend, daß die Indolmycine der Formel (I) herbizid wirksam sind. Die herbiziden Eigenschaften dieser mikrobiell erhältlichen Verbindungen können als eine Bereicherung der Möglichkeiten auf dem Herbizidsektor des Pflanzenschutzes betrachtet werden.

Die vorliegende Erfindung betrifft somit herbizide Mittel, die Indolmycine der Formel (I) enthalten, sowie die Verwendung dieser Indolmycine und der herbiziden Mittel zur Bekämpfung von Unkräutern.

Als herbizid verwendbare bevorzugte Verbindungen der Formel (I) seien die Indolmycine genannt, in welchen

(a) $R^1$ für Methyl, $R^2$ für Methyl und $R^3$ für Wasserstoff oder

(b) $R^1$ für Methyl, $R^2$ für Methyl und $R^3$ für Hydroxy oder

(c) $R^1$ für Methyl, $R^2$ für Methyl und $R^3$ für Methoxy oder

(d) $R^1$ für Wasserstoff, $R^2$ für Wasserstoff und $R^3$ für Wasserstoff

stehen.

Besonders bevorzugt sind hierbei die Verbindungen der Formel (I), in welchen $R^1$ für Methyl, $R^2$ für Methyl und $R^3$ für Wasserstoff (Indolmycin-Grundkörper) und in welcher $R^1$, $R^2$ und $R^3$ für Wasserstoff (N-Desmethyl-C-desmethylindolmycin) stehen.

Ganz besonders bevorzugt wird die Verbindung der Formel (I), in welcher $R^1$ und $R^2$ für Methyl und $R^3$ für Wasserstoff stehen.

Wie bereits erwähnt, sind die Verbindungen der Formel (I) sowie ihre Herstellung bereits bekannt. Sie können dadurch erhalten werden, daß der bekannte Mikroorganismus Stamm Streptomyces griseus ATCC 12 648 (ATCC bedeutet die Hinterlegungsstelle American Type Culture Collection, Rockville, Maryland, U.S.A.), welcher auch bei der Deutschen Sammlung für Mikroorganismen, Grisebachstraße 8, D-3400 Göttingen, Bundesrepublik Deutschland am 04.10.1985 unter der Hinterlegungsnummer DSM 3531 hinterlegt wurde, bekannten Methoden der Fermentation unterworfen wird, wobei für den Fall der Verbindungen der Formel (I), in welcher $R^3$ für Hydroxy oder Methoxy steht (und vorzugsweise $R^1$ und $R^2$ Methyl bedeuten), zweckmäßi

gerweise 5-Hydroxytryptophan bzw. 5-Methoxytryptophan als "precursors" zugegeben werden (vgl. J. Antibiotics 34, 551 (1981)), wobei eine Mutasynthese erfolgt. Es kann davon ausgegangen werden, daß bei der Fermentation alle Verbindungen der Formel (I) entstehen, auch wenn bestimmte Verbindungen noch nicht isoliert oder identifiziert wurden. Vorzugsweise entstehen jedoch die oben als bevorzugt hervorgehobenen Verbindungen (a) bis (d), welche bereits isoliert und strukturell aufgeklärt wurden.

Die Isolierung und Reinigung der erfindungsgemäß verwendbaren Verbindungen erfolgt nach bekannten Methoden und Verfahren. Fermentation und Isolierung der Verbindungen der Formel (I) werden anhand der unten angeführten Beispiele erläutert. Die Struktur der so erhaltenen Verbindungen wurde durch analytische und spektroskopische Untersuchungen bestätigt. Für den Einsatz der Verbindungen der Formel (I) ist eine Feinreinigung nicht erforderlich. Gegebenenfalls kann sogar das Fermentationsgemisch (evtl. nach Abtrennung des Mycels) eingesetzt werden. Zweckmäßigerweise wird man jedoch ein vorgereinigtes Rohprodukt oder ein weiter gereinigtes Produkt verwenden.

Die erfindungsgemäß verwendbaren Wirkstoffe beeinflussen das Pflanzenwachstum und können deshalb als Defoliants, Desiccants, Krautabtötungsmittel, Keimhemmungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale

oder selektive Herbizide wirken, hängt im wesentlichen von der angewendeten Menge und von der Applikationsart ab.

Die Wirkstoffe können z.B. bei den folgenden Pflanzen verwendet werden:

<u>Dikotyle Unkräuter der Gattungen:</u> Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

<u>Dikotyle Kulturen der Gattungen:</u> Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

<u>Monokotyle Unkräuter der Gattungen:</u> Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

<u>Monokotyle Kulturen der Gattungen:</u> Oryza, Zea, Triticum, Hordeum, Avena, Secale, Sorghum, Panicum, Saccharum, Ananas, Asparagus, Allium.

Die Verwendung der Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die erfindungsgemäß verwendbaren Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht

in üblicher Weise, z.B. durch Gießen, Spritzen, Sprühen, Streuen.

Die Wirkstoffe können sowohl vor als auch nach dem Auflaufen der Pflanzen appliziert werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,1 und 20 kg Wirkstoff pro Hektar Bodenfläche, vorzugsweise zwischen 0,1 und 10 kg pro ha.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel

kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
Z.B. Ammoniumsalze und natürliche Gesteinsmehle, wie Kaoline, Tonerden, Talkum, Kreide, Quarz, Attapulgit,

Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 % und ganz besonders bevorzugt zwischen 5 und 80 % Wirkstoff.

Bevorzugte erfindungsgemäße herbizide Mittel enthalten mindestens einen Wirkstoff der Formel (I) sowie mindestens einen oberflächenaktiven Stoff und gegebenenfalls inerte feste und/oder flüssige Streckmittel oder Trägerstoffe.

Die Wirkstoffe können als Herbizide in ihren handelsüblichen Formulierungen sowie in den aus diesen Formulierungen bereiteten Anwendungsformen in Mischung mit anderen Wirkstoffen, wachstumsregulierenden Stoffen oder Herbiziden vorliegen.

Die Wirkstoffe können ferner in handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Auch können zur Wirkungssteigerung folgende Additive zugesetzt werden: Oberflächenaktive Substanzen, Phospholipide, Lecithine, vegetabile und mineralische Öle, z.B. Emulgatoren, Isopropylmyristat usw.

Die Wirksamkeit der erfindungsgemäß verwendbaren Indolmycine soll anhand der folgenden Beispiele erläutert werden.

Beispiel A

Post-emergence-Test / Vermiculite

In Schalen, die mit Vermiculite gefüllt sind, werden Samen von verschiedenen Unkräutern ausgelegt. Die Schalen werden dann mit einer Hoagland-Nährlösung gegossen, bis die Pflanzen eine Größe von 5 bis 10 cm erreicht haben.

Dann werden die Pflanzen mit einer Wirkstoffzubereitung gespritzt.

Nach 2 Wochen wird der Schädigungsgrad der Pflanzen bonitiert in % Schädigung im Vergleich zur Entwicklung der unbehandelten Kontrolle.

Die Testergebnisse gehen aus der folgenden Tabelle hervor.

**Tabelle A**

Post-emergence-Test / Gewächshaus - Vermiculite

| Wirkstoff | Aufwandmenge kg/ha | Unkräuter Lepidium | Echinochloa | Chenopodium | Stellaria |
|---|---|---|---|---|---|
| Indolmycin | 4 | 100 | 100 | 90 | 100 |
| Indolmycin | 2 | 90 | 90 | 90 | 85 |

Indolmycin = Verbindung der Formel (I), in welcher $R^1$ und $R^2$ für Methyl und $R^3$ für Wasserstoff stehen.

## Beispiel B

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.
Es bedeuten:

0 % = keine Wirkung (wie unbehandelte Kontrolle)
100 % = totale Vernichtung

Die Versuchsergebnisse gehen aus der folgenden Tabelle hervor.

**Tabelle B**

Post-emergence-Test / Gewächshaus

| Wirkstoff | Aufwandmenge kg/ha | Unkräuter Lepidium | Echinochloa | Chenopodium | Stellaria |
|---|---|---|---|---|---|
| Indolmycin | 4 | 90 | 95 | 90 | 95 |

Indolmycin = Verbindung der Formel (I), in welcher $R^1$ und $R^2$ für Methyl und $R^3$ für Wasserstoff stehen.

Beispiel 1A

Fermentation des Stammes Streptomyces griseus ATCC 12 648 (DSM 3531)

Der Stamm ATCC 12 648 wird bei etwa +4° C als Stammkonserve auf einem Schrägagarröhrchen gehalten. Der hierzu verwendete HA-Agar enthält je Liter 4 g Hefeextrakt, 10 g Malz, 4 g Dextrose und 15 g Agar (Rest: Wasser) und hat einen pH-Wert von 7,3.
Sporenlösungen des Stammes ATCC 12 648 werden bei -20° C aufbewahrt.

Für die Fermentation wird eine Nährlösung eingesetzt, welche, außer Leitungswasser, 1 % Fleischextrakt und 1 % Pepton sowie 0,2 % NaCl enthält und einen pH-Wert von 6,5 aufweist.

a) Durchführung im Schüttelkolbenmaßstab

1.000 ml Erlenmeyerkolben, die 120 ml Nährlösung enthalten, werden aus einer Schrägagarkultur beimpft und auf einer rotierenden Schüttelmaschine bei 280 rpm (Umdrehungen pro Minute) und 27° C für 72 Stunden inkubiert. Als Vorkultur für einen 10 l-Fermenter dient eine 24 h alte Kultur.

b) Durchführung im 15 l-Fermenter

Die Fermentation wird in einem 15 l-Fermenter durchgeführt, der 10 l Nährlösung, wie oben beschrieben, enthält. Die Sterilisation erfolgt für 20 min bei 121° C. Bei 27° C Inkubationstemperatur und 600 rpm des Blattrührers werden 6 l Luft pro Minute in die Kulturflüssigkeit eingeleitet. Die Impfgutmenge beträgt 10 % der unter a) beschriebenen Kultur.

Eine Konstanthaltung des pH-Wertes bei 7,5 nach Erreichen des pH-Wertes von 7,5 in der Kulturflüssigkeit wird durch pH-gesteuerte Zugabe von 20 %iger steriler Citronensäure erreicht.

Die Ernte der Kulturflüssigkeit erfolgt nach 91 Stunden.

## Beispiel 1B

### Isolierung und Reinigung der Indolmycine

Die Indolmycine werden aus einer Kultursuspension, die gemäß einer Fermentation nach Beispiel 1A erhalten wurde, folgendermaßen isoliert:

Durch Zentrifugation werden aus 10 l Kultursuspension 1 kg nasses Mycel und 9 l Kulturüberstand erhalten. Der Kulturüberstand wird mit 5 l/h auf eine 10 x 40 cm Lewapolsäule aufgetragen. Auf die gleiche Säule wird der wäßrige Rückstand des Acetonextraktes (3 l Aceton eingesetzt) des Mycels aufgetragen.

Der Durchlauf und 20 l Waschwasser der Lewapolsäule werden verworfen, das Methanol-Desorbat der Lewapolsäule wird aufgefangen und zur Trockne eingeengt und ergibt 24 g Rohprodukt.

24 g Rohprodukt werden mit 500 ml Dichlormethan extrahiert, der Dichlormethanextrakt auf 50 ml eingeengt und an einer Sephadex LH-20 Säule (5 x 100 cm) mit Dichlormethan chromatographiert. Entsprechend der biologischen Aktivität werden zwei Fraktionen weiter bearbeitet:

Die erste enthält 2 g Roh-Indolmycin ($R^1$ und $R^2$ = Methyl, $R^3$ = Wasserstoff), die zweite enthält 30 mg N-Desmethyl-C-desmethylindolmycin ($R^1$, $R^2$ und $R^3$ = Wasserstoff).

Die 2 g Roh-Indolmycin werden in 10 ml Dichlormethan aufgenommen und auf eine mit Dichlormethan äquilibrierte Kieselgel Si 60-Säule (Lobar C) aufgetragen. Die Säule wird mit je 2 Bettvolumina Dichlormethan, Dichlormethan/Methanol (99 %/1 % Vol.) und Dichlormethan/Methanol (95 %/5 % Vol.) eluiert. Mit dem 6. Bettvolumen wird 330 mg reines Indolmycin eluiert.

Das so erhaltene Produkt ist chromatographisch einheitlich und die chemisch-physikalischen Analysenergebnisse (Reaktionen mit Dünnschichtchromatographie-Sprühreagenzien, Schmelzpunkt, Elementaranalyse, $^{1}H$- und $^{13}C$-Kernresonanzspektren, Ionenstoß-Massenspektren, UV-Absorptionsspektrum und Infrarot-Absorptionsspektrum) stimmen mit den in der Literatur angegebenen überein.

Entsprechendes gilt für das N-Desmethyl-C-desmethylindolmycin, welches bereits in großer Reinheit anfällt.

Beispiel 2A

Mutasynthese des Stammes Streptomyces griseus ATCC 12 648 (DSM 3531)

Der Stamm ATCC 12 648 wird gemäß Beispiel 1A als Stammkonserve aufbewahrt.

Für die Fermentation wird eine Nährlösung gemäß Beispiel 1A eingestzt.

Zusätzlich werden entweder 5-Methoxytryptophan oder 5-Hydroxytryptophan in einer Konzentration von 1 mg/l Nährlösung bei einsetzender Indolmycinbildung der Kultur zugegeben und entsprechend als Mutasyntheseprodukte entweder 5-Methoxyindolmycin oder 5-Hydroxyindolmycin (siehe Beispiel 2B) hergestellt.

Durchführung im 300 l-Fermenter:

Die Herstellung geeigneter Vorkulturen geschieht, wie in Beispiel 1A angegeben. Die Impfgutmenge beträgt jeweils 10 % der darauf folgenden Kultur. Es kommen jeweils 24 h alte Vorkulturen zur Anwendung.

Die Produktionskultur wird in einem 300 l-Fermenter durchgeführt, der 180 l Nährlösung gemäß Beispiel 1A enthält. Die Sterilisation erfolgt für 30 min bei 121°C. Bei 27°C Inkubationskultur und 400 rpm des Blattrührers werden 100 l Luft pro Minute in die Kulturflüssigkeit eingeleitet. Die Impfgutmenge beträgt auch hier 10 %. Der pH-Wert der Kultur wird auch hier gemäß Beispiel 1A konstant gehalten.

20 h nach dem Animpfen der Produktionskultur wird steril filtriert, entweder 5-Methoxytryptophan oder 5-Hydroxytryptophan in konzentrierter Lösung so zugegeben, daß in der Produktionskultur eine Endkonzentration von 1 mg/l vorliegt.

Nach insgesamt 68 h Kulturdauer der Produktionskultur wird die Kulturflüssigkeit geerntet und werden die Mutasyntheseprodukte 5-Methoxyindolmycin oder 5-Hydroxyindolmycin gemäß Beispiel 2B isoliert.

Beispiel 2B

Isolierung und Reinigung des 5-Methoxyindolmycin ($R^1$ und $R^2$ = $CH_3$; $R^3$ = $OCH_3$) und 5-Hydroxyindolmycin ($R^1$ und $R^2$ = $CH_3$; $R^3$ = OH)

Die Indolmycinderivate werden aus einer Kultursuspension, die gemäß einer Fermentation nach Beispiel 2A erhalten wird, folgendermaßen isoliert:

Durch Zentrifugation werden aus 200 l Kultursuspension 20 kg nasses Mycel und 180 l Kulturüberstand erhalten. Der Kulturüberstand wird mit 50 l/h auf eine 40 x 100 cm Lewapolsäule aufgetragen. Auf die gleiche Säule wird der wäßrige Rückstand des Acetonextraktes (50 l Aceton eingesetzt) des Mycels aufgetragen.

Der Durchlauf und 200 l Waschwasser der Lewapolsäule werden verworfen, das Methanol-Desorbat der Lewapolsäule wird aufgefangen und zur Trockne eingeengt und ergibt 310 g Rohprodukt.

310 g Rohprodukt werden zweimal mit 3 l Dichormethan extrahiert, die vereinigten Dichormethanextrakte auf 100 ml eingeengt und 2x50 ml werden an einer Sephadex LH-20 Säule (5x100 cm) mit Dichlormethan chromatographiert. Entsprechend der biologischen Aktivität werden von jeder Säulenchromatographie drei Fraktionen weiter bearbeitet.

Die erste enthält 3 g Roh-Indolmycin ($R^1$ und $R^2$ = $CH_3$; $R^3$=H), die zweite enthält 0,5 g angereichertes 5-Methoxyindolmycin und die dritte Fraktion enthält 0,1 g angereichertes N-Desmethyl-C-desmethylindolmycin ($R^1$, $R^2$ und $R^3$=H). Die 0,5 g Roh-5-Methoxyindolmycin werden in 10 ml Dichlormethan aufgenommen und auf eine mit Dichlormethan äquilibrierte Kieselgel Si 60-Säule (Lobar C) aufgetragen. Die Säule wird mit je 2 Bettvolumina Dichlormethan, Dichlormethan/Methanol (99 %/1 % Vol.) und Dichlormethan/Methanol (95 %/5 % Vol.) eluiert. Mit dem 6. Bettvolumen werden 50 mg reines 5-Methoxyindolmycin eluiert.

Bei gleicher Vorgehensweise werden aus der Kultursuspension, der 1 mg/l 5-Hydroxytryptophan zugesetzt wurden, 30 mg 5-Hydroxyindolmycin gewonnen, wenn die Lobar C-Kieselgelsäule mit Dichlormethan/Methanol (90 %/10 % Vol.) eluiert wird.

Die analytischen und spektroskopischen Daten der erhaltenen Verbindungen stimmen mit den entsprechenden Literaturangaben überein, so daß die erhaltenen Stoffe eindeutig identifiziert sind.

Folgende Warenzeichen wurden in der Beschreibung und den Beispielen aufgeführt:

LEWAPOL = ist ein Copolymeres auf Basis von Styrol und Divinylbenzol in Perlform (makroporös); LEWAPOL ist ein Warenzeichen der BAYER AG, Leverkusen Bundesrepublik Deutschland

LOBAR C = eine Kieselgel Fertigsäule; LOBAR ist ein Warenzeichen der Firma E. Merck, Darmstadt, Bundesrepublik Deutschland

SEPHADEX LH-20 = epichlorhydrinvernetztes, hydroxypropyliertes Dextran in Perlform; SEPHADEX ist ein Warenzeichen der Firma Pharmacia, Uppsala Schweden.

0223055

## Patentansprüche

1. Herbizide Mittel, gekennzeichnet durch den Gehalt an mindestens einem Indolmycin der Formel (I)

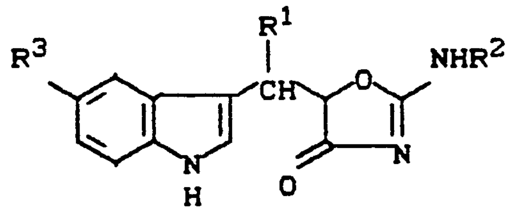

(I)

in welcher

$R^1$ für Wasserstoff oder Methyl steht;

$R^2$ für Wasserstoff oder Methyl steht; und

$R^3$ für Wasserstoff, Hydroxy oder Methoxy steht.

2. Herbizide Mittel nach Anspruch 1, gekennzeichnet durch den Gehalt an mindestens einem Indolmycin der Formel (I), worin

(a) $R^1$ für Methyl, $R^2$ für Methyl und $R^3$ für Wasserstoff oder

(b) $R^1$ für Methyl, $R^2$ für Methyl und $R^3$ für Hydroxy oder

(c) $R^1$ für Methyl, $R^2$ für Methyl und $R^3$ für Methoxy oder

(d) $R^1$ für Wasserstoff, $R^2$ für Wasserstoff und $R^3$ für Wasserstoff

stehen.

3. Herbizide Mittel nach Anspruch 1, gekennzeichnet durch den Gehalt an mindestens einem Indolmycin der Formel (I),

worin

$R^1$ und $R^2$ für Methyl und $R^3$ für Wasserstoff stehen oder worin

$R^1$, $R^2$ und $R^3$ für Wasserstoff stehen.

4. Herbizide Mittel nach Anspruch 1, gekennzeichnet durch den Gehalt an dem Indolmycin der Formel (I),w orin $R^1$ und $R^2$ für Methyl und $R^3$ für Wasserstoff stehen.

5. Herbizide Mittel nach den Ansprüchen 1 bis 4, dadurch gekennzeichnet, daß sie außer dem Indolmycin-Wirkstoff wenigstens einen oberflächenaktiven Stoff und gegebenenfalls feste und/oder flüssige Träger- oder Streckmittel enthalten.

6. Verfahren zur Bekämpfung von Unkräutern, dadurch gekennzeichnet, daß man wenigstens ein Indolmycin der Formel (I) gemäß Anspruch 1 auf die Unkräuter oder ihren Lebensraum einwirken läßt.

7. Verwendung von Indolmycinen der Formel (I) gemäß Anspruch 1 zur Bekämpfung von Unkräutern.

8. Verwendung von Indolmycinen der Formel (I) gemäß Anspruch 1, in welcher

(a) $R^1$ für Methyl, $R^2$ für Methyl und $R^3$ für Wasserstoff oder

(b) $R^1$ für Methyl, $R^2$ für Methyl und $R^3$ für Hydroxy oder

(c) $R^1$ für Methyl, $R^2$ für Methyl und $R^3$ für Methoxy oder

(d) $R^1$ für Wasserstoff, $R^2$ für Wasserstoff und $R^3$ für Wasserstoff

stehen, zur Bekämpfung von Unkräutern.

9. Verwendung der herbiziden Mittel gemäß den Ansprüchen 1 bis 5 zur Bekämpfung von Unkräutern.

10. Verfahren zur Herstellung von herbiziden Mitteln, dadurch gekennzeichnet, daß man wenigstens ein Indolmycin der Formel (I) gemäß Anspruch 1 mit Streckmitteln und/oder oberflächenaktiven Mitteln vermischt.

Europäisches Patentamt

**EUROPÄISCHER RECHERCHENBERICHT**

0223055

Nummer der Anmeldung

EP 86 11 4122

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | THE MERCK INDEX, Auflage 10, 1983, Seiten 720,721, Merck & CO., Inc., Rahway, US; * 4850: Indolmycin * |  | A 01 N 43/76 |
|  | ----- |  |  |

| RECHERCHIERTE SACHGEBIETE (Int. Cl.4) |
|---|
| A 01 N |

Der vorliegende Recherchenbericht wurde für alle Patentansprüche erstellt.

| Recherchenort | Abschlußdatum der Recherche | Prüfer |
|---|---|---|
| DEN HAAG | 03-02-1987 | DECORTE D. |

KATEGORIE DER GENANNTEN DOKUMENTE

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument